# EUROPEAN PATENT APPLICATION

(11) **EP 4 572 101 A1**
(43) Date of publication of application: **18.06.2025**
(21) Application number: 23215874.1
(22) Date of filing: 12.12.2023
(51) Int. Cl.: H02K 5/132, E21B 43/12, F04D 13/08

(54) **ELECTRIC MOTOR FOR AN ELECTRIC SUBMERSIBLE PUMP SYSTEM, PROTECTOR FOR AN ELECTRIC SUBMERSIBLE PUMP SYSTEM AND ELECTRIC SUBMERSIBLE PUMP SYSTEM**

(71) Applicant: Oil Dynamics GmbH, 69115 Heidelberg (DE)
(72) Inventor: Mohammadi, Ahmad, 69115 Heidelberg (DE)
(74) Representative: Altmann Stößel Dick Patentanwälte PartG mbB

(57) **Abstract**

An electric motor (116) for an electric submersible pump system (100) is disclosed. The electric motor (116) is configured to operate an electric submersible pump (102) of the electric submersible pump system (100). The electric motor (116) defines at least one interior space (118). The interior space (118) is filled with a motor oil. The motor oil has a specific gravity with respect to water of greater than 1 as determined at 20°C.

## Description

### Technical Field

The present invention relates to an electric motor for an electric submersible pump system, to a protector for an electric submersible pump system and to an electric submersible pump system.

### Background art

In a conventional electric submersible pump system, submersible electric motors are filled with light lubricating fluid as a lubricant and also as an insulator between rotor and the stator due to its lubricity and dielectric properties. The protectors that are used to seal the electric motor from the well fluid also are filled with the same light lubricating fluid. The lubricity is required for lubrication of internal bearings and dielectric properties are important for insulation purposes. The light lubricating fluid is usually called "motor oil" in electric submersible pump applications.

Despite the advantages provided by these electric submersible pump systems, there is still potential for improvements. Particularly, the specific gravity of the light lubricating fluid is lower than water, i.e. specific gravity of light lubricating fluid is less than 1. Well fluid in oil application is crude oil and in geothermal application is hot water, wherein the latter has a specific gravity of about 1. However, water exists even in the crude oil with some percentages that is called water cut. Therefore, the density of well fluid is always greater that light lubricating fluid.

Due to low density of light lubricating fluid if compared to water, the light lubricating fluid has always tendency to sit on top of the well fluid. Therefore, in the cases that the protector and electric motor are filled with light lubricating fluid, the well fluid tries to enter and replace the light lubricating fluid inside the protector and then the electric motor. Thus, there is continuously a leakage of light lubricating fluid from protector to the well fluid once it installed in the well. Labyrinth chambers and elastic bag chambers are two conventional systems that are utilized separately or in combination to build typical protector for an electric submersible pump system. However, many provisions are considered in the design of the protector to minimize the leakage rate and consequently to elongate the service life of the protector, but the operating period is still time limited.

### Problem to be solved

It is therefore desirable to provide an electric motor for an electric submersible pump system, a protector for an electric submersible pump system and an electric submersible pump system configured to at least minimize or even overcome the aforementioned drawbacks. Particularly, it is an aim of the present disclosure to provide an electric motor for an electric submersible pump system, a protector for an electric submersible pump system and an electric submersible pump system, which allow to minimize the leakage rate and to elongate the service life of the electric motor and protector.

### Summary

This problem is addressed by an electric motor for an electric submersible pump system, a protector for an electric submersible pump system and an electric submersible pump system with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to a first aspect of the present disclosure, an electric motor for an electric submersible pump system is disclosed. The electric motor is configured to operate an electric submersible pump of the electric submersible pump system. The electric motor defines at least one interior space. The interior space is filled with a motor oil. The motor oil has a specific gravity with respect to water of greater than 1 as determined at 20°C.

Contrary to conventional electric submersible pump systems, the electric motor is filled with a motor oil which has a higher density than water, i.e. SG > 1. Thus, the motor oil is a Heavy Lubricating Fluid (HLF), wherein the HLF has the requirements for the lubricity. Due to HLF higher density with respect to well fluid, the HLF has always tendency to stay below the well fluid. In this case, when the electric motor is filled with HLF, the HLF will stay inside the electric motor and the well fluid remains on top. Therefore, HLF cannot escape or leak from the electric motor equipment to the well. Accordingly, the risk of leaking HLF into the well is reduced and theoretically is zero.

The motor oil may have a specific gravity with respect to water of at least 1.05, preferably at least 1.10 and more preferably at least 1.25. With other words, the motor oil may have a specific gravity with respect to water of 1.05 or more, preferably 1.10 or more, and more preferably 1.25 or more.

Thus, a sufficient difference between the density of the motor oil and the well fluid is provided which reliably allows the motor oil to stay below the well fluid. Accordingly, the risk of leaking motor oil into the well is reduced and theoretically is zero.

The electric motor may further comprise a base portion defining a base space and a head portion defining a head space. The interior space may be located between the base space and the head space. The base space and the head space are filled with the motor oil. Thus, also the head portion and base portion are filled with the motor oil and any leakage of motor oil therefrom is prevented or significantly reduced.

When connecting the electric motor to another electric motor so as to form a kind of tandem motor assembly wherein one electric motor sits on top of the other electric motor, then the head and base portions may be used for fluid communication between the electric motors. Particularly, motor oil will fill from lower tandem motor head space into the base portion of the upper electric motor. Therefore, there will be fluid communication between lower tandem motor and upper tandem motor.

The electric motor may further comprise a shaft. The shaft may extend from the head space through the interior space to the base space. Thus, the electric motor may operate the shaft so as to drive a submersible pump.

The electric motor may further comprise at least a first bearing and a second bearing. The first bearing may be configured to radially support the shaft at the base portion. The second bearing may be configured to radially support the shaft at the head portion. Thus, rotating of the shaft is facilitated.

According to a second aspect of the present disclosure, a protector for an electric submersible pump system is disclosed. The protector is configured to seal an electric motor for operating an electric submersible pump of the electric submersible pump system. The protector defines at least one interior space. The interior space is filled with a motor oil. The motor oil has a specific gravity with respect to water of greater than 1.

Contrary to conventional electric submersible pump systems, the protector is filled with a motor oil which has a higher density than water, i.e. SG > 1. Thus, the motor oil is a Heavy Lubricating Fluid (HLF), wherein the HLF has the requirements for the lubricity. Due to HLF higher density with respect to well fluid, the HLF has always tendency to stay below the well fluid. In this case, when the protector is filled with HLF, the HLF will stay inside the protector and the well fluid remains on top. Therefore, HLF cannot escape or leak from the protector equipment to the well. Accordingly, the risk of leaking HLF into the well is reduced and theoretically is zero.

The motor oil may have a specific gravity with respect to water of at least 1.05, preferably at least 1.10 and more preferably at least 1.25. With other words, the motor oil may have a specific gravity with respect to water of 1.05 or more, preferably 1.10 or more, and more preferably 1.25 or more.

Thus, a sufficient difference between the density of the motor oil and the well fluid is provided which reliably allows the motor oil to stay below the well fluid. Accordingly, the risk of leaking motor oil into the well is reduced and theoretically is zero.

The protector may further comprise a base portion defining a base space and a head portion defining a head space. The interior space may be located between the base space and the head space. The base space and the head space may be filled with the motor oil. Thus, also the head portion and base portion are filled with the motor oil and any leakage of motor oil therefrom is prevented or significantly reduced.

When providing a protector and motor connection, protector base portion sits on the upper tandem motor head portion. Then, motor oil will fill from lower tandem motor head from into the protector base portion. Therefore, there will be fluid communication between lower tandem motor and upper protector.

The protector may further comprise a shaft. The shaft may extend from the head space through the interior space to the base space. Thus, the protector may allow an electric motor to operate the shaft so as to drive a submersible pump.

The protector may further comprise at least a first bearing and a second bearing. The first bearing may be configured to radially support the shaft at the base portion. The second bearing may be configured to radially support the shaft at the head portion. Thus, rotating of the shaft is facilitated.

According to a further aspect of the present disclosure, an electric submersible pump system is disclosed. The electric submersible pump system comprises an electric submersible pump, at least first electric motor according to any one the embodiments disclosed before or disclosed hereinafter, at least a second electric motor according to any one the embodiments disclosed before or disclosed hereinafter and/or at least one protector according to any one the embodiments disclosed before or disclosed hereinafter. The first electric motor is arranged on top of the second electric motor such that the interior space of the second electric motor is in fluid communication with the interior space of the first electric motor and/or the protector is arranged on top of the first electric motor such that the interior space of the protector is in fluid communication with the interior space of the first electric motor.

Using HLF in the electric submersible pump system has the following advantages:
- Increasing Mean Time Between Failure (MTBF) of the ESP system by reducing/eliminating the leakage and consequently increasing the service life of the protector.
- More environment friendly solution for an ESP system, especially in geothermal applications. With HLF inside the ESP system, the well will not be contaminated by leaked oil and remains clean.
- Recoverable HLF from an old ESP. Since there is no leakage of HLF, it will not be lost and therefore remains inside the equipment and can be used for new electric submersible pump installations.

The term "electric motor" as used herein is a broad term and is to be given its ordinary and customary meaning to a person of ordinary skill in the art and is not to be limited to a special or customized meaning. The term specifically may refer, without limitation, to an electrical machine that converts electrical energy into mechanical energy. Most electric motors operate through the interaction between the motor's magnetic field and electric current in a wire winding to generate force in the form of torque applied on the motor's shaft. Electric motors can be powered by direct current (DC) sources, such as from batteries, or rectifiers, or by alternating current (AC) sources, such as a power grid, inverters or electrical generators. Electric motors may be classified by considerations such as power source type, construction, application and type of motion output. They can be powered by AC or DC, be brushed or brushless, single-phase, two-phase, or three-phase, axial or radial flux, and may be air-cooled or liquid-cooled.

The term "electric submersible pump system" as used herein is a broad term and is to be given its ordinary and customary meaning to a person of ordinary skill in the art and is not to be limited to a special or customized meaning. The term specifically may refer, without limitation, to a system that comprises an electric submersible pump and further constructional members including at least an electric motor for operating the electric submersible pump.

The term "electric submersible pump" as used herein is a broad term and is to be given its ordinary and customary meaning to a person of ordinary skill in the art and is not to be limited to a special or customized meaning. The term specifically may refer, without limitation, to a device which has a hermetically sealed motor close-coupled to the pump body. The whole assembly is submerged in the fluid to be pumped. A main advantage of this type of pump is that it allows a high flow production with relatively low cost. Submersible pumps push fluid to the surface, rather than jet pumps, which create a vacuum and rely upon atmospheric pressure. Submersible pumps use pressurized fluid from the surface to drive a hydraulic motor downhole, rather than an electric motor, and are used in heavy oil applications with heated water as the motive fluid. Electric submersible pumps are multistage centrifugal pumps operating in a vertical position or in a horizontal position. Liquids, accelerated by the impeller, lose their kinetic energy in the diffuser, where a conversion of kinetic to pressure energy takes place. This is the main operational mechanism of radial and mixed flow pumps. The pump shaft is connected to the gas separator or the protector by a mechanical coupling at the bottom of the pump. Fluids enter the pump through an intake screen and are lifted by the pump stages. Other parts include the radial bearings (bushings) distributed along the length of the shaft, providing radial support to the pump shaft. An optional thrust bearing takes up part of the axial forces arising in the pump, but most of those forces are absorbed by the protector's thrust bearing. Submersible pumps are used in oil production to provide a relatively efficient form of "artificial lift", able to operate across a broad range of flow rates and depths. By decreasing the pressure at the bottom of the well (by lowering bottom-hole flowing pressure, or increasing drawdown), significantly more oil can be produced from the well when compared with natural production. The pumps are typically electrically powered, referred to as Electrical Submersible Pumps (ESP). ESP systems consist of both surface components (housed in the production facility, for example an oil platform), and sub-surface components (found in the well hole). Surface components include the motor controller (often a variable speed controller), surface cables and transformers. The subsurface components are deployed by attaching to the downhole end of a tubing string, while at the surface, and then lowered into the well bore along with the tubing. A high-voltage alternating-current source at the surface drives the subsurface motor. The subsurface components generally include a pump portion and a motor portion, with the motor downhole from the pump. The motor rotates a shaft that, in turn, rotates pump impellers to lift fluid through production tubing to the surface. These components must reliably work at high temperatures such as 150 °C, 200 °C or even more and high pressures of up to 34 MPa, from deep wells of up to 3.7 km deep with high energy requirements such as 1500 horsepower (750 kW), 1300 horsepower or even more. The pump itself is a multi-stage unit, with the number of stages being determined by the operating requirements. Each stage includes an impeller and diffuser. Each impeller is coupled to the rotating shaft and accelerates fluid from near the shaft radially outward. The fluid then enters a non-rotating diffuser, which is not coupled to the shaft and contains vanes that direct fluid back toward the shaft. The motor used to drive the pump is typically a three-phase, squirrel cage induction motor but may also be a permanent magnet motor which has a better efficiency than a squirrel cage induction motor ESP assemblies may also include: protectors which are also called seals coupled to the shaft between the motor and pump; screens to reject sand; and fluid separators at the pump intake that separate gas, oil and water. ESPs have dramatically lower efficiencies with significant fractions of gas, greater than about 10% volume at the pump intake, so separating gas from oil prior to the pump can be important. Some ESPs include a water/oil separator which permits water to be re-injected downhole. As some wells produce up to 90% water, and fluid lift is a significant cost, re-injecting water before lifting it to the surface can reduce energy consumption and improve economics Given ESPs' high rotational speed of up to 4000 rpm (67 Hz to 120 Hz) and tight clearances, they are not very tolerant of solids, such as sand.

The term "protector" as used herein is a broad term and is to be given its ordinary and customary meaning to a person of ordinary skill in the art and is not to be limited to a special or customized meaning. The term specifically may refer, without limitation, to a device which is configured to hermetically seal an electric motor of an electric submersible pump.

The term "motor oil" as used herein is a broad term and is to be given its ordinary and customary meaning to a person of ordinary skill in the art and is not to be limited to a special or customized meaning. The term specifically may refer, without limitation, to any liquid that is configured to be used as lubricant for an electric motor and an insulator between rotor and the stator due to its lubricity and dielectric properties.

The term "specific gravity" as used herein is a broad term and is to be given its ordinary and customary meaning to a person of ordinary skill in the art and is not to be limited to a special or customized meaning. The term specifically may refer, without limitation, to the ratio of the density (mass of a unit volume) of a substance to the density of a given reference material. In the technical field of the present invention, the specific gravity is measured with respect to water at room temperature, i.e. 20 °C. The term "specific gravity" is also known as "relative density". Relative density (RD) or specific gravity (SG) is a dimensionless quantity, as it is the ratio of either densities or weights. If a substance's relative density is less than 1 then it is less dense than the reference; if greater than 1 then it is denser than the reference. If the relative density is exactly 1 then the densities are equal; that is, equal volumes of the two substances have the same mass. If the reference material is water, then a substance with a relative density (or specific gravity) less than 1 will float in water. For example, an ice cube, with a relative density of about 0.91, will float. A substance with a relative density greater than 1 will sink. Temperature and pressure must be specified for both the sample and the reference. Unless specified otherwise, the pressure at which the specific gravity is measured is 1 atm, i.e. 101.325 kPa.

The terms "head portion" and "bottom portion" as used herein are broad terms and are to be given its ordinary and customary meaning to a person of ordinary skill in the art and are not to be limited to a special or customized meaning. The term specifically may refer, without limitation, to portions of an electric motor or protector defined by a direction of gravity. Particularly, a head portion is arranged above a bottom portion with respect to a direction of gravity.

The term "space" as used herein is a broad term and is to be given its ordinary and customary meaning to a person of ordinary skill in the art and is not to be limited to a special or customized meaning. The term specifically may refer, without limitation, to a volume having predefined extensions.

The terms "first", "second" and the like as used herein merely serve to distinguish between respective constructional members and are not intended to define any specific order of presence or importance.

Summarizing and without excluding further possible embodiments, the following embodiments may be envisaged:
Embodiment 1: An electric motor for an electric submersible pump system, wherein the electric motor is configured to operate an electric submersible pump of the electric submersible pump system, wherein the electric motor defines at least one interior space, wherein the interior space is filled with a motor oil, wherein the motor oil has a specific gravity with respect to water of greater than 1 as determined at 20°C.
Embodiment 2: The electric motor according to the preceding embodiment, wherein the motor oil has a specific gravity with respect to water of at least 1.05, preferably at least 1.10 and more preferably at least 1.25.
Embodiment 3: The electric motor according to any preceding embodiment,wherein the electric motor further comprises a base portion defining a base space and a head portion defining a head space, wherein the interior space is located between the base space and the head space, wherein the base space and the head space are filled with the motor oil.
Embodiment 4: The electric motor according to the preceding embodiment, wherein the electric motor further comprises a shaft, wherein the shaft extends from the head space through the interior space to the base space.
Embodiment 5: The electric motor according to the preceding embodiment, wherein the electric motor further comprises at least a first bearing and a second bearing, wherein the first bearing is configured to radially support the shaft at the base portion, wherein the second bearing is configured to radially support the shaft at the head portion.
Embodiment 6: A protector for an electric submersible pump system, wherein the protector is configured to seal an electric motor for operating an electric submersible pump of the electric submersible pump system, wherein the protector defines at least one interior space, wherein the interior space is filled with a motor oil, wherein the motor oil has a specific gravity with respect to water of greater than 1.
Embodiment 7: The protector according to the preceding embodiment, wherein the motor oil has a specific gravity with respect to water of at least 1.05, preferably at least 1.10 and more preferably at least 1.25.
Embodiment 8: The protector according to any preceding embodiment, wherein the protector further comprises a base portion defining a base space and a head portion defining a head space, wherein the interior space is located between the base space and the head space, wherein the base space and the head space are filled with the motor oil.
Embodiment 9: The protector according to the preceding embodiment, wherein the protector further comprises a shaft, wherein the shaft extends from the head space through the interior space to the base space.
Embodiment 10: The protector according to the preceding embodiment, wherein the protector further comprises at least a first bearing and a second bearing, wherein the first bearing is configured to radially support the shaft at the base portion, wherein the second bearing is configured to radially support the shaft at the head portion.
Embodiment 11: An electric submersible pump system, comprising
   an electric submersible pump,
   at least first electric motor according to any one of the preceding embodiments referring to an electric motor,
   at least a second electric motor according to any one of the preceding embodiments referring to an electric motor and/or at least one protector according to any one of the preceding embodiments referring to a protector,
   wherein the first electric motor is arranged on top of the second electric motor such that the interior space of the first electric motor or the protector is in fluid communication with the interior space of the second electric motor and/or the protector is arranged on top of the first electric motor such that the interior space of the protector is in fluid communication with the interior space of the first electric motor.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:

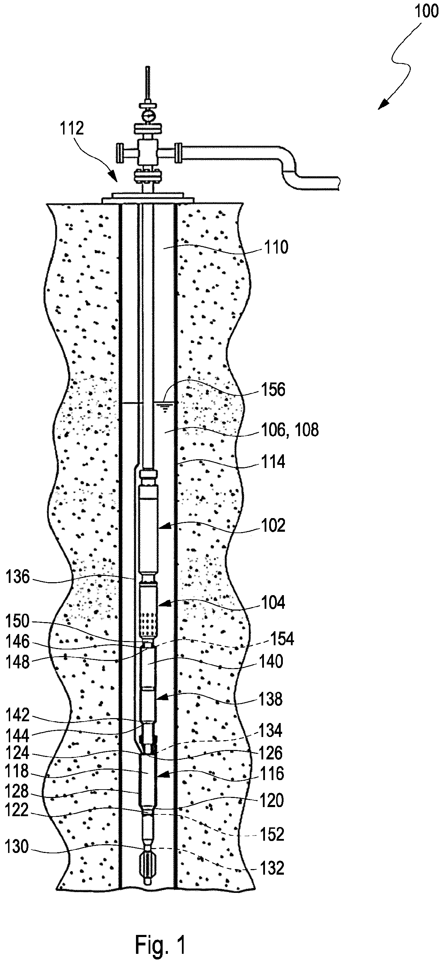

- Figure 1: shows a partial cross-sectional view of an electric submersible pump system according to an embodiment of the present invention.

### Detailed description of the embodiments

Figure 1 shows a partial cross-sectional view of an electric submersible pump system 100 according to an embodiment of the present invention. The electric submersible pump system 100 comprises at least one electric submersible pump 102. The electric submersible pump 102 comprises a pump intake 104. The electric submersible pump 102 is configured to be submerged in a fluid 106 to be pumped. The fluid is particularly a well fluid 108 in a well hole 110 that is pumped to a surface area 112. In the well hole 110, a well casing 114 is arranged. As such, the electric submersible pump 102 is configured to suck the well fluid 108 through the pump intake 104 and convey it to the surface area 112.

The electric submersible pump system 100 comprises an electric motor 116. The electric motor 116 is configured to operate the electric submersible pump 102 of the electric submersible pump system 100. The electric motor 116 is formed substantially cylindrically. The electric motor 116 defines at least one interior space 118. The interior space 118 is filled with a motor oil (not shown in detail). The motor oil has a specific gravity with respect to water of greater than 1 as determined at 20°C. The motor oil has a specific gravity with respect to water of at least 1.05, preferably at least 1.10 and more preferably at least 1.25 such as 1.30. The motor oil has dielectric properties similar to common light lubricating fluid.

The electric motor 116 further comprises a base portion 120 defining a base space 122 and a head portion 124 defining a head space 126. The interior space 118 is located between the base space 122 and the head space 126. The interior space 118 is formed in a middle or central portion 128 of the electric motor 102. The interior space 118 is larger than the head space 126 and the base space 122. The base space 122 and the head space 126 are also filled with the motor oil.

The electric motor 116 further comprises a shaft (not shown in detail). The shaft extends from the head space 126 through the interior space 118 to the base space 122. The shaft of the electric motor 116 is arranged within a centralizer 130. The centralizer 130 may be rod shaped. The centralizer 130 is configured to centralize or align the respective components of the electric submersible pump system 100.The electric motor 116 further comprises at least a first bearing 132 and a second bearing 134. The first bearing 132 is configured to radially support the shaft at the base portion 120. The second bearing 134 is configured to radially support the shaft at the head portion 124.

The electric motor 116 is supplied with electric energy by means of an electric cable 136 which is connected to the electric motor 116 and extends within the well casing 114 from a ground surface and the surface area 112, respectively, to the electric motor 116.

The electric submersible pump system 100 comprises a protector 138. The protector 138 is configured to seal the electric motor 116. The protector 138 is formed substantially cylindrically. The protector 138 defines at least one interior space 140. The interior space 140 is filled with a motor oil. The motor oil has a specific gravity with respect to water of greater than 1 as determined at 20°C. The motor oil has a specific gravity with respect to water of at least 1.05, preferably at least 1.10 and more preferably at least 1.25 such as 1.30. The motor oil has dielectric properties similar to common light lubricating fluid. For example, the motor oil may be an oil having a specific gravity at 0 °C of 1.94 g/ml, at 20 °C of 1.91 g/ml, and at 100 °C of 1.76 g/ml. The motor oil may be a fluorinated synthetic oil.

The protector 138 further comprises a base portion 142 defining a base space 144 and a head portion 146 defining a head space 148. The interior space 140 is located between the base space 144 and the head space 148. The base space 144 and the head space 148 are also filled with the motor oil. The interior space 140 is larger than the head space 144 and the base space 148. The base space 144 and the head space 148 are also filled with the motor oil.

The protector 138 further comprises a shaft. The shaft extends from the head space 148 through the interior space 140 to the base space 144. The shaft of the protector 138 is arranged within a centralizer 150. The centralizer 150 may be rod shaped. The centralizer 150 is configured to centralize or align the respective components of the electric submersible pump system 100.The protector 138 further comprises at least a first bearing 152 and a second bearing 154. The first bearing 152 is configured to radially support the shaft at the base portion 142. The second bearing 154 is configured to radially support the shaft at the head portion 146. The shaft of the electric motor 116 and the shaft of the protector 138 may be integrally formed such as formed as a single shaft or may be connected to one another.

A is shown in Figure 1, the protector 138 is arranged on top of the electric motor 116 such that the interior space 140 of the protector 138 is in fluid communication with the interior space 118 of the electric motor 116. Further, the protector 138 is arranged below the electric submersible pump 102 and is connected to the pump intake 104. Further, Figure 1 shows the well fluid 108 within the well casing 114. An exemplary well fluid level 156 is also shown.

As the motor oil has a specific gravity greater than the well fluid 108, the motor oil has always tendency to stay below the well fluid 108. In this case, when the protector 138 and the electric motor 116 are filled with this specific motor oil, the motor oil will stay inside the protector 138 and electric motor 116 and the well fluid 108 remains on top. Therefore, the motor oil cannot escape or leak from equipment to the well. Accordingly, the risk of leaking motor oil into the well is reduced and theoretically is zero.

Alternatively or in addition to the protector 138, the electric submersible pump system 100 may comprise more than one electric motor 116. For example, the electric submersible pump system 100 comprises a first electric motor 116 as described above and at least a second electric motor designed as described above. The first electric motor 116 and the second electric motor may be arranged as a tandem motor assembly, wherein the first electric motor 116 forms an upper electric motor 116 and the second electric motor forms a lower electric motor. With other words, the fist electric motor 116 may sit on top of the second electric motor. In this case, the first electric motor 116 is arranged on top of the second electric motor such that the interior space 118 of the first electric motor 116 is in fluid communication with the interior space 118 of the second electric motor.

### List of reference numbers

- 100: electric submersible pump system
- 102: electric submersible pump
- 104: pump intake
- 106: fluid
- 108: well fluid
- 110: well hole
- 112: surface area
- 114: well casing
- 116: electric motor
- 118: interior space
- 120: base portion
- 122: base space
- 124: head portion
- 126: head space
- 128: central portion
- 130: centralizer
- 132: first bearing
- 134: second bearing
- 136: electric cable
- 138: protector
- 140: interior space
- 142: base portion
- 144: base space
- 146: head portion
- 148: head space
- 150: centralizer
- 152: first bearing
- 154: second bearing
- 156: well fluid level

## Claims

1. An electric motor (116) for an electric submersible pump system (100), wherein the electric motor (116) is configured to operate an electric submersible pump (102) of the electric submersible pump system (100), wherein the electric motor (116) defines at least one interior space (118), wherein the interior space (118) is filled with a motor oil, wherein the motor oil has a specific gravity with respect to water of greater than 1 as determined at 20°C.

2. The electric motor (116) according to the preceding claim, wherein the motor oil has a specific gravity with respect to water of at least 1.05, preferably at least 1.10 and more preferably at least 1.25.

3. The electric motor (116) according to any preceding claim,wherein the electric motor (116) further comprises a base portion (120) defining a base space (122) and a head portion (124) defining a head space (126), wherein the interior space (118) is located between the base space (122) and the head space (126), wherein the base space (122) and the head space (126) are filled with the motor oil.

4. The electric motor (116) according to the preceding claim, wherein the electric motor (116) further comprises a shaft, wherein the shaft extends from the head space (126) through the interior space (118) to the base space (122).

5. The electric motor (116) according to the preceding claim, wherein the electric motor (116) further comprises at least a first bearing (132) and a second bearing (134), wherein the first bearing (132) is configured to radially support the shaft at the base portion (120), wherein the second bearing (134) is configured to radially support the shaft at the head portion (124).

6. A protector (138) for an electric submersible pump system (100), wherein the protector (138) is configured to seal an electric motor (116) for operating an electric submersible pump (102) of the electric submersible pump system (100), wherein the protector (138) defines at least one interior space (140), wherein the interior space (140) is filled with a motor oil, wherein the motor oil has a specific gravity with respect to water of greater than 1.

7. The protector (138) according to the preceding claim, wherein the motor oil has a specific gravity with respect to water of at least 1.05, preferably at least 1.10 and more preferably at least 1.25.

8. The protector (138) according to any preceding claim, wherein the protector (138) further comprises a base portion (142) defining a base space (144) and a head portion (146) defining a head space (148), wherein the interior space (140) is located between the base space (144) and the head space (148), wherein the base space (144) and the head space (148) are filled with the motor oil.

9. The protector (138) according to the preceding claim, wherein the protector (138) further comprises a shaft (150), wherein the shaft (150) extends from the head space (148) through the interior space (140) to the base space (144).

10. The protector (138) according to the preceding claim, wherein the protector (138) further comprises at least a first bearing (152) and a second bearing (154), wherein the first bearing (152) is configured to radially support the shaft (150) at the base portion (142), wherein the second bearing (154) is configured to radially support the shaft (150) at the head portion (146).

11. An electric submersible pump system (100), comprising
an electric submersible pump (102),
at least first electric motor (116) according to any one of the preceding claims referring to an electric motor (116),
at least a second electric motor (116) according to any one of the preceding claims referring to an electric motor (116) and/or at least one protector (138) according to any one of the preceding claims referring to a protector (138),
wherein the first electric motor (116) is arranged on top of the second electric motor (116) such that the interior space (118) of the first electric motor (116) is in fluid communication with the interior space (118) of the second electric motor (116) and/or the protector (138) is arranged on top of the first electric motor (116) such that the interior space (140) of the protector (138) is in fluid communication with the interior space (118) of the first electric motor (116).
